# EUROPEAN PATENT SPECIFICATION

(11) **EP 2 706 254 B1**
(45) Date of publication and mention of the grant of the patent: **06.05.2015**
(21) Application number: 12183146.5
(22) Date of filing: 05.09.2012
(51) Int. Cl.: F16D 55/224, F03D 7/02

(54) **A braking system**
Bremssystem
Système de freinage

(43) Date of publication of application: 12.03.2014
(73) Proprietor: S.B. Patent Holdings ApS, 5882 Vejstrup (DK)
(72) Inventor: Nielsen, Poul Sejer, 5220 Odense SØ (DK); Hornskov, Peter, 5250 Odense SV (DK)
(74) Representative: Kitchen, Steven Richard

(56) References cited:
- DE-A1-102009 049 769
- DE-U- 1 887 149
- US-A1- 2010 038 191
- US-B2- 7 591 351

## Description

### FIELD OF THE INVENTION

The present invention relates inter alia to a hydraulic braking system. The braking system is particularly well suited for deployment in wind turbine constructions and is well suited for other constructions as well. The braking system comprises a hydraulic brake calliper with a hydraulic brake piston and a disc; the brake piston is moveable in a direction normal to surface of the brake disc to force a brake pad against the surface of the disc. The brake calliper further comprises two elements protruding from a base element and straddling a segment of the brake disc with a gap size there between being larger than the thickness of the disc, fastening means provided in the base element for fastening the calliper to a construction, and a ledge. The ledge is provided in the gap between the two protruding elements at the base element, has a radial and circumferential extension relatively to the orientation of the brake disc along a part of a surface of the brake disc and proceeds in between the brake piston and the fastening means to define a minimum gap size in between the two elements.

### BACKGROUND OF THE INVENTION

Although the present invention is applicable to other technical areas than the area of wind turbine technology, the invention emerges out of the wind turbine technology and the description of the background of the invention is accordingly made with reference to the wind turbine technology.

A wind turbine comprises a nacelle or machine housing carrying the electricity producing parts, blades as well as a yaw system which controls the orientation of the rotors relative to the prevailing wind direction. The yaw system often comprises a toothed brake disc fixed to the tower and a motor activated gear attached to the nacelle and meshing with the toothed gear so that activation of the motor results in a revolving of the nacelle thereby producing the yaw motion of the nacelle.

Historically, wind turbines are fitted with a ball bearing for the yaw motion that the nacelle can rest on, and that allows the nacelle to revolve around the vertical axis of the tower. The ball bearing also holds the nacelle on to the tower top in the case of strong winds, where the wind forces on the nacelle tend to blow the nacelle off the tower.

As the wind turbines get bigger, the technology is slowly shifting away from ball bearings for the yaw motion and towards using sliding bearings. However, the wind forces on the nacelle will still try to blow the nacelle off the tower and as wind turbines without a ball bearing no longer have the down hold force that the ball bearing provide, the down hold force will have to come from somewhere else.

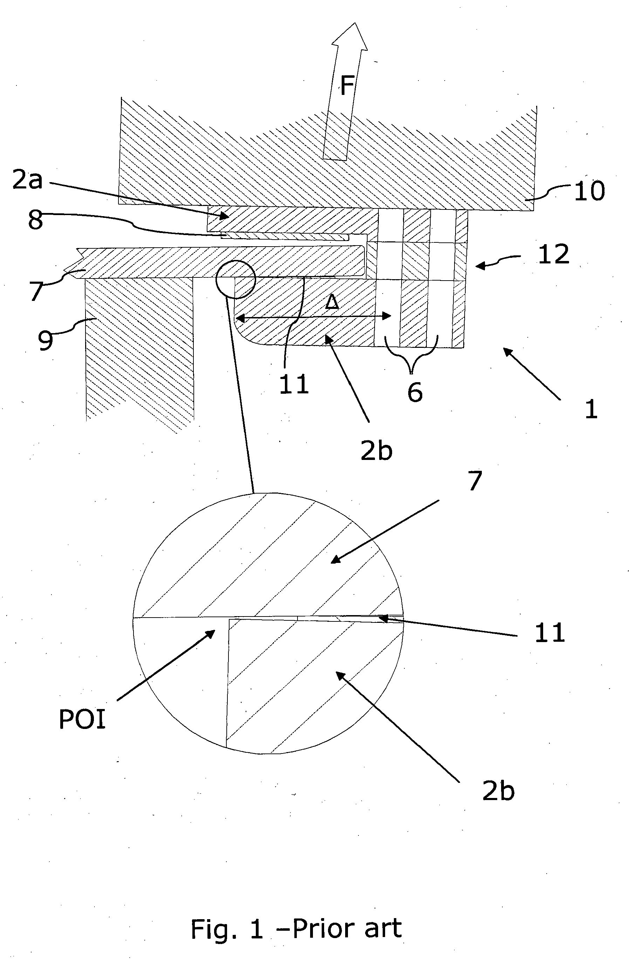

As down hold force for the nacelle, on a wind turbine with sliding bearings, the brakes are often used. However as the brake is attached on the nacelle bottom and hold the nacelle on to the top of the tower, by holding on to a flange bolted on the tower top, the torque, generated by the distance from the impact point between the brake and the flange, to the bolts, see figure 1, inflict an undesired stress situation for the mounting bolts that hold the brake to the nacelle bottom.

Hence, an improved down hold force would be advantageous, and in particular a more efficient and/or reliable way of relieving the stress on the mounting of the brake would be advantageous.

### OBJECT OF THE INVENTION

It is an object of the present invention to relieve the stress on the mounting of a hydraulic brake, in particular a yaw brake of a wind turbine.

It is a further object of the present invention to provide an alternative to the prior art.

In particular, it may be seen as an object of the present invention to provide a hydraulic calliper that solves the above-mentioned problems of the prior art.

### SUMMARY OF THE INVENTION

Thus, the above described objects and several other objects are intended to be obtained in a first aspect of the invention by providing a brake comprising a brake calliper with at least one brake piston, said brake co-operates, when forming part of a brake system, with a brake disc having a radial extension and a thickness normal to the radial extension. The brake piston(s) is (are) moveable in a direction normal to the radial extension of the brake disc to force a brake pad against the surface of the brake disc to produce a braking friction force.

Such a brake is known e.g. from US 2010/0038191 A1.

According to the invention, the brake calliper preferably further comprises two elements protruding from a base element and straddling a segment of the brake disc with a gap size there between being larger than the thickness of the disc; which allows the brake disc to rotate inside the calliper when no braking is applied and the calliper is positioned in a non-tilted position.

Fastening means for fastening the calliper to a construction is/are typically provided in the base element.

Callipers according to the invention further comprise a ledge provided in the gap between the two protruding elements at the base element. The ledge has a radial and circumferential extension relatively to the orientation of the brake disc along a part of the surface of the brake disc and proceeds in between the brake piston(s) and the fastening means to define a minimum gap size in between the two protruding elements.

Thereby, a tilting of the construction on which the calliper is fastened relatively to the brake disc results in that the calliper is tilted relatively to the disc. As the ledge proceed in between the brake piston and the fastening means and further defines a minimum gap size in between the two protruding elements, a tilting of the calliper relatively to the brake disc results in that the point of impact, POI, between the calliper and the brake disc is ensured to be located at the ledge. Further, as the POI is situated between close to the fastening means, the torque resulting from the tilting acting on the fastening means of the calliper is kept low and in many instances minimised. As a result of the low torque, the stress induced in e.g. bolt forming part of the fastening means is low.

Thus, a concept of the invention is to introduce an elevated area - a ledge - in the brake calliper that will impact with e.g. a bolted flange acting a brake disc, reducing the distance from the point of impact to e.g. the bolts of the fastening means, thereby reducing the stress on the bolts. The ledge can be of the same material as the calliper itself, or it can be of a different material.

In the present context terms are used in manner being ordinary to a skilled person. Some of these terms are explained below:
*Base element* is preferably used to mean the part of the calliper from which the two protruding elements extend. Accordingly, the phrase "provided at the base element" may mean that the ledge is provided at a position between the piston and the fastening means.
*A brake* according to the present invention preferably comprises a calliper with one or more brake pistons combined with brake pad(s) to exert a brake force against a brake disc and if present a back stop typically arranged opposite of the combination of brake piston and brake pad to counter balance the forces exerted from the brake piston and brake pad normal to the surface of the brake disc.
*Braking system* is preferably used to mean a system comprising a brake and a brake disc.

The means for attaching the calliper to a construction may preferably comprise one or more through going holes provided in the base element and extending perpendicular to the radial extension of the brake disc.

The ledge may preferably comprise a plurality of elevations.

The two protruding elements may preferably each form part of a lower respectively an upper part of the calliper, and the calliper may in such embodiment further comprise a middle part arranged in between the upper and lower part to provide the gap between the two protruding elements.

One of the protruding elements may preferably house a brake piston and a brake pad, the brake piston and brake pad being actuatable towards the surface of the brake disc to provide a braking friction force between the brake pad and the brake disc. Is it noted that callipers having brake pistons housed in both protruding elements are also considered within the scope of the present invention. Furthermore, one of the protruding elements houses a slide material.

The ledge may preferably be made from a sliding material. Alternatively, the ledge may be made from a friction material used for brake pads. In some embodiments, the ledge may be made from metal.

In order e.g. to make the ledge replaceable without changing or refurbishing the calliper, the ledge may be releasable arranged in the calliper. Alternatively, the ledge is made integral with one of the two protruding elements (2a, 2b).

The brake may be a hydraulic brake with a hydraulic activated brake piston, an electromechanical brake with an electromechanical activated brake piston, or a mechanical activated brake with a mechanical activated brake piston.

The invention relates in a second aspect to a braking system comprising a brake according to the first aspect and a brake disc.

In a third aspect, the invention relates to a brake calliper adapted to house at least one brake piston, and a section of a brake disc having a radial extension and a thickness normal to the radial extension. The brake calliper comprises
- two elements protruding from a base element and being adapted to straddle a segment of a brake disc with a gap size there between being larger than the thickness of the disc ,
- fastening means for fastening the calliper to a construction, the means for fastening is/are provided in the base element, and
- a ledge provided in the gap between the two protruding elements at the base element, the ledge being positioned so as to be adapted to extend along a part of a surface of the brake disc in between the brake piston(s) and the fastening means and defining a minimum gap size in between the two elements.

The brake calliper may be a hydraulic brake calliper adapted to house a hydraulic activated brake piston, an electromechanical brake calliper adapted to house an electromechanical activated brake piston, or a mechanical activated brake adapted to house a mechanical activated brake piston.

In a fourth aspect, the invention relates to a wind turbine comprising a brake system according to the second aspect. The wind turbine comprises a tower and a nacelle, the wind turbine further comprises a brake disc in the form of a toothed flange attached at the top of the tower and forming part of the yaw motion system of the nacelle, wherein the brake calliper is attached to the nacelle and the two protruding elements straddles the brake disc so that movement of the brake piston towards the brake disc may provide a braking friction force to the brake disc to prevent or limit a yaw motion of the nacelle.

The first, second, third and fourth aspects of the present invention - and features thereof - may each be combined with any of the other aspects. These and other aspects of the invention will be apparent from and elucidated with reference to the embodiments described hereinafter.

The embodiments focus on elucidating the invention with reference to a hydraulic brake, calliper and braking system. However, application of other activation mechanism such as electromechanical and mechanical activation mechanism are considered within the reach of a skilled person.

### BRIEF DESCRIPTION OF THE FIGURES

The present invention, and in particular preferred embodiments thereof, will now be described in further details with reference to the accompanying figures. The figures and accompanying description show ways of implementing the present invention and are not to be construed as being limiting to other possible embodiments falling within the scope of present invention.
Figure 1 shows schematically a cross sectional and partial view of a prior art braking system applied at a nacelle of a wind turbine. The figure shows the situation where the nacelle is tilted by the action of the wind;
Figure 2 shows schematically in a 3-dimensional view an embodiment of a brake calliper according to the present invention;
Figure 3 shows schematically a cross section and partial view of an embodiment of a braking system applied at a nacelle of a wind turbine;
   and
Figure 4 shows the embodiments of figure 3 in a position wherein the nacelle is tilted by the action of the wind.

Reference is made to figure 1 which shows schematically a cross sectional view through a wind turbine tower 9, having a toothed flange 7 in the form of a brake disc bolted on to the top of the tower 9. Figure 1 also shows the nacelle 10 and the brake calliper 1.

The brake calliper 1 comprising fastening means 6 in the form of two or more through going holes through which bolts (not shown) protrude to engage with threads provided in the nacelle 10 so as to fastening the calliper 1 to the bottom of the nacelle 1. The calliper 1 further comprises a hydraulic activated brake piston (not shown) in the protruding element 2b which piston forces a brake pad 11 against the surface of the brake disc 7 to provide a braking friction force. A back stop comprising a sliding material 8 is provided on the other side of the brake disc 7 by the calliper part 2a to counter pressure the force exerted by the hydraulic piston on the brake disc 7.

Figure 1 also shows the force (F) resulting from the action of the wind and which will try to rip the nacelle 10 off the tower 9. The force F is the result of the wind acting on the nacelle 10, inflicting a tilt force. The nacelle 10 is lifted by the wind in one side, resulting in a tilting motion around a horizontal axis. To stop the nacelle from being ripped off the tower, the brake calliper 1 will have to meet the brake disc 7 bolted on the tower top, and keep the nacelle 10 in place. As seen on the figure, the distance Δ between the point of impact POI and the bolts fastening the calliper 1 to the nacelle 10 is substantial and may provide a substantial torque on the bolts of the fastening means and thereby introduce a substantial stress in the bolts. This results in an increased risk that the torque acting on the fastening means 6 will deteriorate the bolts and/or the calliper 1 resulting in that the calliper 1 brakes off the nacelle 10 which in turn may result in that no braking force can be applied and in some instances that the nacelle is ripped off the wind turbine tower 9.

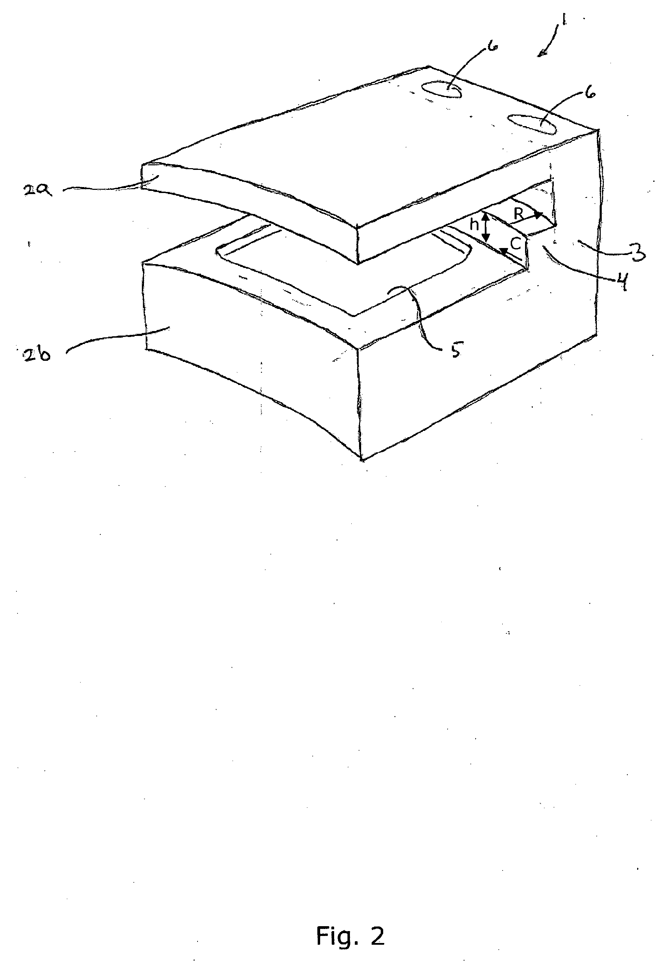

Figure 2 shows schematically in a 3-dimensional view an embodiment of a brake calliper 1 according to the present invention, which calliper 1 at least mitigates the problems induced by the substantial torque acting on the fastening means 6 of fig. 1.

As shown in fig. 2, the hydraulic brake calliper 1 has at least one hydraulic brake piston 5. The piston 5 is arranged in a bore of the calliper 1 and a brake pad 11 (not shown) is arranged above the piston head. Movement of the piston 5 and thereby the brake pad is provided by pressurised hydraulic fluid introduced into the bore below the piston head.

A braking system according to the present invention typically further comprises a brake disc 7 having a radial extension and a thickness normal to the radial extension. The brake disc 7 (not shown in fig. 2) and the brake calliper 1 are each arranged on different elements of a construction, and the braking system is adapted to brake a relative movement of the elements as the brake piston 5 is moveable in a direction normal to the radial extension of the brake disc 7 to force the brake pad 11 against the surface of the brake disc 7 to produce a braking friction force.

The brake calliper 1 comprises two elements 2a, 2b protruding from a base element 3 and straddling a segment of the brake disc 7 with a gap size there between being larger than the thickness of the brake disc 7 (not shown in figure 2), thereby allowing the brake disc 7 to move freely in between the two protruding elements 2a, 2b when the piston is positioned sufficiently inside the bore to prevent contact between the brake disc 7 and the brake pad 11.

Fastening means 6 for fastening the calliper 1 to a construction are provided in the base element 3. The fastening means 6 are in the embodiments shown in fig. 2 embodied as through going holes in the base element 3 through which bolts (not shown) protrude to engage with threads provided in the construction so as to fastening the calliper 1 to the construction as disclosed in connection with fig.1. Please note that while the through going holes in figure 1, 3 and 4 are shown as being provided besides each other in radial direction of the calliper, the through going holes in the embodiment of fig. 2 are shown as being provided besides each other in circumferential direction. The actual position and number of through going holes are chosen in accordance with the structural design of the calliper to provide fastening, respecting the space available for the calliper and the strength needed.

A ledge 4 is provided in the gap between the two protruding elements 2a, 2b at the base element 3. The ledge 4 extends in radial and circumferential direction of the brake disc along a part of the surface of the brake disc 7 in between the brake piston 5 and the fastening means 6 and defines a minimum gap size in between the two protruding elements 2a, 2b. The ledge 4 is of uniform height h. As indicated in fig. 2, the ledge 4 is curved with a constant curvature "κ" and extends in the full width of the calliper 1. However, in many preferred embodiments, the ledge 4 has no curvature and proceeds in a straight manner, e.g. parallel to a tangent of the brake disc 7.

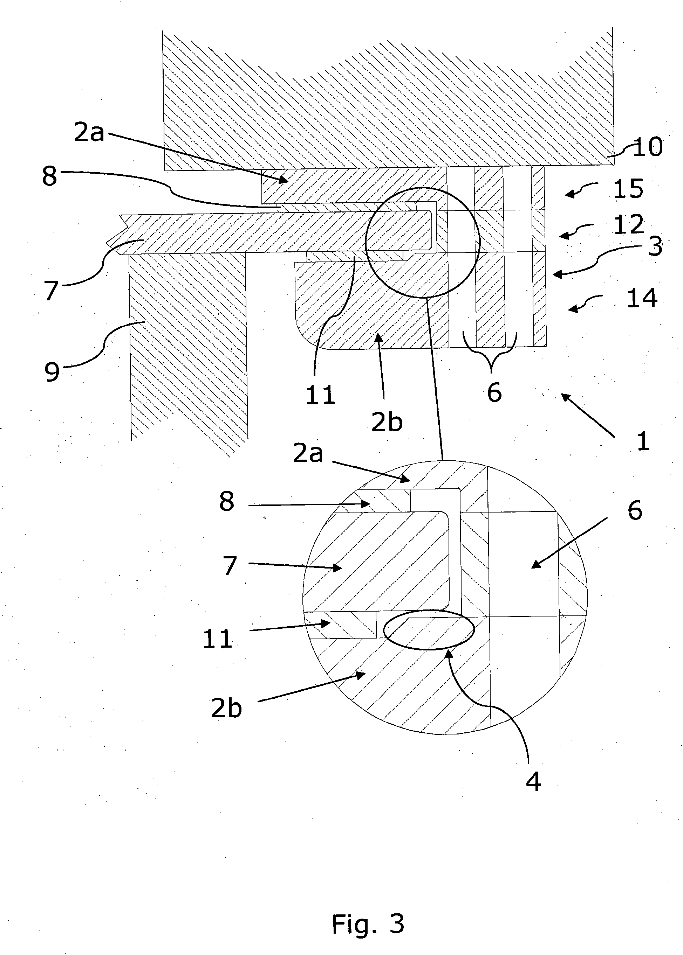

Figure 3 shows schematically a cross sectional and partial view of the embodiment of a braking system shown in fig. 2 applied at a nacelle of a wind turbine; the braking system is shown during a braking action, that is when the piston 5 (not shown) forces the brake pad 11 against the brake disc 7 and counter pressure is provided on the other side of the brake disc 7 by the protruding element 2a and the sliding material 8.

Again, numeral 10 references the nacelle of a wind turbine, 8 the sliding material, 11 the brake pad, 9 the wind turbine tower and 7 the brake disc in the form of a toothed brake disc as disclosed in connection with fig. 1. The calliper 1 is attached to the nacelle 10 by bolts going through the holes 6 and engaging with threads provided in the nacelle 1. Thus, in the embodiment disclosed, the fastening means for fastening the calliper 1 to a construction comprises a number of through going holes 6 provided in the base element 3 and extending perpendicular to the radial extension of the brake disc 7.

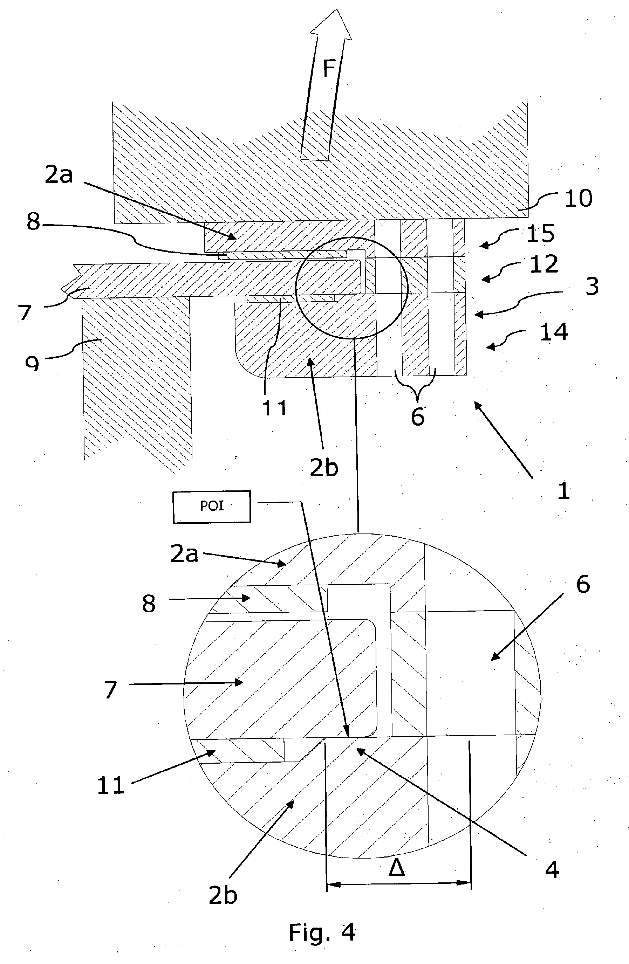

Figure 4 shows the embodiments of figure 3 in a position wherein the nacelle is tilted by the action of the wind and no braking action is applied (not visible). Same numerals as used in fig. 3 are used in fig. 4.

The force F shown in fig. 4 results from the wind action on the nacelle 10 and this force will try to rip the nacelle off the tower 9. The force F inflicts a tilting force on the nacelle 10 and the nacelle 10 is lifted by the wind in one side (typically the windward side) resulting in a tilting of the nacelle 10 around a horizontal axis often being perpendicular to the incoming wind direction; with reference to fig. 4, the wind is assumed to flow from left to right in the figure.

As a result of the tilting of the nacelle 10, the calliper 1 is also tilted relatively to the brake disc whereby the ledge 4 comes into contact with the brake disc 7 at the point of impact POI being located in the gap in between the position where the brake pad 11 acts on the brake disc 7 and the base element 3. It is noted that the point of impact POI typically has a spatial extension and is not be considered as a point in a mathematical sense.

Comparing the location of the POI in the embodiment shown in fig. 4 with the braking system shown in fig. 1, it is noted that the distance Δ between the POI and the fastening means 6 is reduced significantly when the POI is at the ledge 4. This results in that the torque acting on fastening means 6 and thereby the stress induced in the bolts (the torque will tension the bolts) is also reduced significantly thereby reducing the risk of the fastening means being damaged by the tilting of the nacelle 1.

It is noted that when the brake disc 7 contacts the ledge 4, the brake piston 5 is either retracted into the bore and/or the brake piston 5 is allowed to be pushed into the bore by the brake disc 7 during the tilting of the nacelle 10 in order not to define a point of impact POI at the surface of the brake pad.

The radial (arrow labelled "R" in fig. 2) and circumferential (arrow labelled "C" in fig. 2) extension of the ledge 4 may be selected in accordance with the dimensions of the construction to which the brake system is to be applied. An often important design parameter to be considered when designing the ledge 4 is that the point of impact POI should be defined in tilted position of the nacelle 10 in between the area where the brake pad contacts the brake disc and fastening means. The actual size of the ledge 4 in radial, circumferential direction and its height is chosen in accordance with the overall dimensioning of the brake as such. It is also noted that the brake shown in fig. 2 is to be arranged at the outside of a brake disc 7, whereas the brakes shown in figures 1, 3 and 4 are to be arranged at the inside of the brake disc ("inside" refers to region encircled by the brake disc 7).

Furthermore the point of impact POI should preferably have a spatial extension allowing it to withstand the forces applied to it without being destroyed, e.g. permanently geometrically distorted during impact.

The ledge 4 shown in the figures herein is formed as an uninterrupted or continuous element. However, the ledge 4 may be formed as an interrupted or segmented element by comprising a plurality of elevations. The segmented elements may also be provided by using a plurality of brake callipers along the brake disc. The ledge 4 is in many preferred embodiments made integral with the calliper 1 e.g. by being formed in protruding element 2b. The forming can be made by casting the protruding element 2b so as to contain the ledge 4 and subsequently finishing the protruding element 2b to its desired tolerances. Alternatively, the ledge 4 can be made as a separate part releasable attached to the protruding element 2b. In the latter instance, the ledge 4 can be renewed if worn and can be made from material being different from the material of the protruding element 2b for instance from a sliding material or even from a friction material similar to the material of the brake pad 11. Further, the ledge, as shown in figure 3 and 4 the surface of the ledge 4 facing towards the brake pad 11, may be slanted.

The two protruding elements 2a, 2b each form part of a lower 14 respectively an upper part 15 of the calliper 1 and the calliper 1 further comprising a middle part 12 arranged in between the upper 15 and lower part 14 to provide the gap between the two protruding elements 2a, 2b (upper, lower and middle refer merely to the relative orientation between the elements shown in the figures). It is noted that in this configuration, the base element 3 comprises a section of each of the two protruding elements 2a, 2b and that the base element is not a separate part of the calliper 1 but the region of the calliper 1 from which the protruding elements 2a, 2b extend and which comprises the fastening means 6.

The protruding elements 2b house the brake piston 5 and a brake pad 11 as disclosed above. However, depending on e.g. the tilting orientation, the brake piston 5 may be housed in the other protruding element 2a and even both protruding elements 2a, 2b may house a piston 5.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A brake comprising a brake calliper (1) with at least one brake piston (5), said brake co-operates, when forming part of a brake system, with a brake disc (7) having a radial extension and a thickness normal to the radial extension; the brake piston (5) is moveable in a direction normal to the radial extension of the brake disc (7) to force a brake pad (11) against the surface of the brake disc (7) to produce a braking friction force, the brake calliper (1) further comprises
- two elements (2a, 2b) protruding from a base element (3) and straddling a segment of the brake disc (7) with a gap size there between being larger than the thickness of the brake disc (7),
- fastening means (6) for fastening the calliper (1) to a construction, the means for fastening is/are provided in the base element (3),
**characterised by**
- a ledge (4) provided in the gap between the two protruding elements (2a, 2b) at the base element (3), the ledge (4) having a radial and circumferential extension relatively to the orientation of the brake disc (7) along a part of a surface of the brake disc (7) and proceeding in between the brake piston(s) (5) and the fastening means (6) to define a minimum gap size in between the two elements (2a, 2b).

2. A brake according to claim 1, wherein the means for attaching the calliper (1) to a construction comprises one or more through going holes (6) provided in the base element (3) and extending perpendicular to the radial extension of the brake disc (2).

3. A brake according to any of the preceding claims, wherein the ledge (4) comprises a plurality of elevations.

4. A brake according to any of the preceding claims, (1) wherein the two protruding elements (2a, 2b) each form part of a lower (14) respectively an upper part (15) of the calliper (1) and the calliper (1) further comprising a middle part (12) arranged in between the upper and lower part to provide the gap between the two protruding elements (2a, 2b).

5. A brake according to any of the preceding claims, wherein one of the protruding elements (2a, 2b) houses a brake piston (5) and a brake pad (11), the brake piston and brake pad being actuatable towards the surface of the brake disc (7) to provide a braking friction force between the brake pad (11) and the brake disc (7).

6. A brake according to any of the preceding claims, wherein one of the protruding elements (2a, 2b) houses a sliding material (8).

7. A brake according to any of the preceding claims, wherein the ledge (4) is made from a sliding material.

8. A brake according to any of the preceding claims, wherein the ledge is made from a friction material used for brake pads.

9. A brake according to any of the preceding claims 1-7, wherein the ledge is made from metal.

10. A brake according to any of the preceding claims, wherein the ledge (4) is a releasable arranged in the calliper (1).

11. A brake according to any of the preceding claims 1-7, wherein the ledge (4) is made integral with one of the two protruding elements (2a, 2b).

12. A brake according to any of the preceding claims, wherein the brake is a hydraulic brake with a hydraulic activated brake piston (5)

13. A brake according to any of the preceding claims 1-11, wherein the brake is an electromechanical brake with an electromechanical activated brake piston (5).

14. A brake according to any of the preceding claims 1-11, wherein the brake is a mechanical activated brake with a mechanical activated brake piston (5).

15. A braking system comprising a brake according to any of the preceding claims and a brake disc (7).

16. A brake calliper (1) adapted to house at least one brake piston (5) and a section of a brake disc (7) having a radial extension and a thickness normal to the radial extension; the brake calliper (1) comprises
- two elements (2a, 2b) protruding from a base element (3) and being adapted to straddle a segment of a brake disc (7) with a gap size there between being larger than the thickness of the brake disc (7),
- fastening means (6) for fastening the calliper (1) to a construction, the means for fastening is/are provided in the base element (3), and
**characterised by**
- a ledge (4) provided in the gap between the two protruding elements (2a, 2b) at the base element (3), the ledge (4) being positioned so as to be adapted to extend along a part of a surface of the brake disc (7) and in between the brake piston(s) (5) and the fastening means (6) and defining a minimum gap size in between the two elements (2a, 2b).

17. A wind turbine comprising a braking system according to claim 15, the wind turbine comprises a tower (9) and a nacelle (10), the wind turbine further comprises a brake disc (7) in the form of a toothed flange attached at the top of the tower (9) and forming part of yaw motion system of the nacelle (10), wherein the brake calliper (1) is attached to the nacelle (10) and the two protruding elements (2a, 2b) straddles the brake disc (7) so that movement of the brake piston (5) towards the brake disc (7) may provide a braking friction force to the brake disc (7) to prevent or limit the yaw motion of the nacelle (10).

## Patentansprüche

1. Bremse, welche einen Bremssattel (1) mit mindestens einem Bremskolben (5) umfasst, wobei die Bremse, wenn sie einen Teil einer Bremsanlage bildet, mit einer Bremsscheibe (7) zusammenwirkt, die eine radiale Erstreckung und eine zu der radialen Erstreckung senkrechte Dicke aufweist; wobei der Bremskolben (5) in einer zu der radialen Erstreckung der Bremsscheibe (7) senkrechten Richtung beweglich ist, um einen Bremsbelag (11) gegen die Oberfläche der Bremsscheibe (7) zu drücken, um eine Bremsreibungskraft zu erzeugen, wobei der Bremssattel (1) ferner umfasst:
- zwei Elemente (2a, 2b), die von einem Trägerelement (3) vorstehen und ein Segment der Bremsscheibe (7) umgreifen, mit einem Zwischenraum zwischen ihnen, der größer als die Dicke der Bremsscheibe (7) ist,
- Befestigungsmittel (6) zum Befestigen des Sattels (1) an einer Konstruktion, wobei das/die Mittel zum Befestigen in dem Trägerelement (3) vorgesehen ist/sind,
**gekennzeichnet durch**
- einen Absatz (4), der in dem Zwischenraum zwischen den zwei vorstehenden Elementen (2a, 2b) an dem Trägerelement (3) vorgesehen ist, wobei der Absatz (4) eine radiale Erstreckung und eine Umfangserstreckung relativ zu der Ausrichtung der Bremsscheibe (7) entlang eines Teils einer Fläche der Bremsscheibe (7) aufweist und zwischen dem (den) Bremskolben (5) und den Befestigungsmitteln (6) verläuft, um eine minimale Zwischenraumgröße zwischen den zwei Elementen (2a, 2b) zu definieren.

2. Bremse nach Anspruch 1, wobei das Mittel zum Befestigen des Sattels(1) an einer Konstruktion ein oder mehrere Durchgangslöcher (6) umfasst, die in dem Trägerelement (3) vorgesehen sind und sich senkrecht zur radialen Erstreckung der Bremsscheibe (2) erstrecken.

3. Bremse nach einem der vorhergehenden Ansprüche, wobei der Absatz (4) mehrere Erhebungen umfasst.

4. Bremse nach einem der vorhergehenden Ansprüche, (1) wobei die zwei vorstehenden Elemente (2a, 2b) jeweils einen Teil eines Unterteils (14) bzw. eines Oberteils (15) des Sattels (1) bilden und der Sattel (1) ferner einen Mittelteil (12) umfasst, der zwischen dem Ober- und dem Unterteil angeordnet ist, um den Zwischenraum zwischen den zwei vorstehenden Elementen (2a, 2b) vorzusehen.

5. Bremse nach einem der vorhergehenden Ansprüche, wobei eines der vorstehenden Elemente (2a, 2b) einen Bremskolben (5) und einen Bremsbelag (11) beherbergt, wobei der Bremskolben und der Bremsbelag in Richtung der Oberfläche der Bremsscheibe (7) betätigbar sind, um eine Bremsreibungskraft zwischen dem Bremsbelag (11) und der Bremsscheibe (7) zu erzeugen.

6. Bremse nach einem der vorhergehenden Ansprüche, wobei eines der vorstehenden Elemente (2a, 2b) ein Gleitmaterial (8) beherbergt.

7. Bremse nach einem der vorhergehenden Ansprüche, wobei der Absatz (4) aus einem Gleitmaterial hergestellt ist.

8. Bremse nach einem der vorhergehenden Ansprüche, wobei der Absatz aus einem Reibmaterial hergestellt ist, das für Bremsbeläge verwendet wird.

9. Bremse nach einem der vorhergehenden Ansprüche 1 - 7, wobei der Absatz aus Metall hergestellt ist.

10. Bremse nach einem der vorhergehenden Ansprüche, wobei der Absatz (4) lösbar in dem Sattel (1) angeordnet ist.

11. Bremse nach einem der vorhergehenden Ansprüche 1 - 7, wobei der Absatz (4) einstückig mit einem der zwei vorstehenden Elemente (2a, 2b) hergestellt ist.

12. Bremse nach einem der vorhergehenden Ansprüche, wobei die Bremse eine hydraulische Bremse mit einem hydraulisch betätigten Bremskolben (5) ist.

13. Bremse nach einem der vorhergehenden Ansprüche 1 - 11, wobei die Bremse eine elektromechanische Bremse mit einem elektromechanisch betätigten Bremskolben (5) ist.

14. Bremse nach einem der vorhergehenden Ansprüche 1 - 11, wobei die Bremse eine mechanisch betätigte Bremse mit einem mechanisch betätigten Bremskolben (5) ist.

15. Bremsanlage, welche eine Bremse nach einem der vorhergehenden Ansprüche und eine Bremsscheibe (7) umfasst.

16. Bremssattel (1), welcher dazu eingerichtet ist, mindestens einen Bremskolben (5) und einen Abschnitt einer Bremsscheibe (7), die eine radiale Erstreckung und eine zu der radialen Erstreckung senkrechte Dicke aufweist, zu beherbergen, wobei der Bremssattel (1) umfasst:
- zwei Elemente (2a, 2b), die von einem Trägerelement (3) vorstehen und dazu eingerichtet sind, ein Segment einer Bremsscheibe (7) zu umgreifen, mit einem Zwischenraum zwischen ihnen, der größer als die Dicke der Bremsscheibe (7) ist,
- Befestigungsmittel (6) zum Befestigen des Sattels (1) an einer Konstruktion, wobei das/die Mittel zum Befestigen in dem Trägerelement (3) vorgesehen ist/sind, und
**gekennzeichnet durch**
- einen Absatz (4), der in dem Zwischenraum zwischen den zwei vorstehenden Elementen (2a, 2b) an dem Trägerelement (3) vorgesehen ist, wobei der Absatz (4) so positioniert ist, dass er dazu eingerichtet ist, sich entlang eines Teils einer Fläche der Bremsscheibe (7) und zwischen dem (den) Bremskolben (5) und den Befestigungsmitteln (6) zu erstrecken, und eine minimale Zwischenraumgröße zwischen den zwei Elementen (2a, 2b) definiert.

17. Windenergieanlage, welche eine Bremsanlage nach Anspruch 15 umfasst, wobei die Windenergieanlage einen Turm (9) und eine Gondel (10) umfasst, wobei die Windenergieanlage ferner eine Bremsscheibe (7) in der Form eines gezahnten Flansches umfasst, die am oberen Bereich des Turms (9) befestigt ist und einen Teil eines Windnachführungssystems der Gondel (10) bildet, wobei der Bremssattel (1) an der Gondel (10) befestigt ist und die zwei vorstehenden Elemente (2a, 2b) die Bremsscheibe (7) umgreifen, so dass eine Bewegung des Bremskolbens (5) in Richtung der Bremsscheibe (7) eine Bremsreibungskraft auf die Bremsscheibe (7) ausüben kann, um die Gierbewegung der Gondel (10) zu verhindern oder zu begrenzen.

## Revendications

1. Frein comprenant un étrier de frein (1) avec au moins un piston de frein (5), ledit frein, lorsqu'il fait partie d'un système de freinage, coopérant avec un disque de frein (7) ayant une extension radiale et une épaisseur normale par rapport à l'extension radiale ; le piston de frein (5) étant mobile dans une direction normale par rapport à l'extension radiale du disque de frein (7) afin de forcer une plaquette de frein (11) contre la surface du disque de frein (7) de manière à produire une force de friction de freinage, l'étrier de frein (1) comprenant en outre :
- deux éléments (2a, 2b) dépassant d'un élément de base (3) et enjambant un segment du disque de frein (7) avec une taille d'espacement entre eux qui est supérieure à l'épaisseur du disque de frein (7),
- des moyens de fixation (6) pour fixer l'étrier (1) sur une construction, le/les moyen(s) pour la fixation étant fourni(s) dans l'élément de base (3),
**caractérisé par**
- un rebord (4) fourni dans l'espacement entre les deux éléments protubérants (2a, 2b) sur l'élément de base (3), le rebord (4) ayant une extension radiale et circonférentielle par rapport à l'orientation du disque de frein (7) le long d'une partie d'une surface du disque de frein (7) et se prolongeant entre le/les piston(s) de frein (5) et les moyens de fixation (6) afin de définir une taille minimale d'espacement entre les deux éléments (2a, 2b).

2. Frein selon la revendication 1, dans lequel moyen pour fixer l'étrier (1) sur une construction comprend un ou plusieurs trous de passage (6) fourni(s) dans l'élément de base (3) et s'étendant perpendiculairement à l'extension radiale du disque de frein (2).

3. Frein selon l'une quelconque des revendications précédentes, dans lequel le rebord (4) comprend une pluralité d'élévations.

4. Frein selon l'une quelconque des revendications précédentes, (1) dans lequel les deux éléments protubérants (2a, 2b) font chacun partie respectivement d'une partie inférieure (14) et supérieure (15) de l'étrier (1), et l'étrier (1) comprenant en outre une partie centrale (12) disposée entre les parties supérieure et inférieure pour fournir l'espacement entre les deux éléments protubérants (2a, 2b).

5. Frein selon l'une quelconque des revendications précédentes, dans lequel l'un des éléments protubérants (2a, 2b) héberge un piston de frein (5) et une plaquette de frein (11), le piston de frein et la plaquette de frein pouvant être actionnés vers la surface du disque de frein (7) afin de fournir une force de friction de freinage entre la plaquette de frein (11) et le disque de frein (7).

6. Frein selon l'une quelconque des revendications précédentes, dans lequel l'un des éléments protubérants (2a, 2b) héberge un matériau de coulissement (8).

7. Frein selon l'une quelconque des revendications précédentes, dans lequel le rebord (4) est fait à partir d'un matériau de coulissement.

8. Frein selon l'une quelconque des revendications précédentes, dans lequel le rebord est fait à partir d'un matériau de friction utilisé pour des plaquettes de frein.

9. Frein selon l'une quelconque des revendications 1 - 7 précédentes, dans lequel le rebord est fait à partir de métal.

10. Frein selon l'une quelconque des revendications précédentes, dans lequel le rebord (4) est disposé de manière détachable dans l'étrier (1).

11. Frein selon l'une quelconque des revendications 1 - 7 précédentes, dans lequel le rebord (4) est intégralement formé par l'un des deux éléments protubérants (2a, 2b).

12. Frein selon l'une quelconque des revendications précédentes, dans lequel le frein est un frein hydraulique avec un piston de frein (5) activé hydrauliquement.

13. Frein selon l'une quelconque des revendications 1 - 11 précédentes, dans lequel le frein est un frein électromécanique avec un piston de frein (5) activé électromécaniquement.

14. Frein selon l'une quelconque des revendications 1 - 11 précédentes, dans lequel le frein est un frein activé mécaniquement avec un piston de frein (5) activé mécaniquement.

15. Système de freinage comprenant un frein selon l'une quelconque des revendications précédentes et un disque de frein (7).

16. Etrier de frein (1) adapté pour héberger au moins un piston de frein (5) et une section d'un disque de frein (7) ayant une extension radiale et une épaisseur normale par rapport à l'extension radiale ; l'étrier de frein (1) comprenant :
- deux éléments (2a, 2b) dépassant d'un élément de base (3) et adaptés pour enjamber un segment d'un disque de frein (7) avec une taille d'espacement entre eux qui est supérieure à l'épaisseur du disque de frein (7),
- des moyens de fixation (6) pour fixer l'étrier (1) sur une construction, le/les moyen(s) pour la fixation étant fourni(s) dans l'élément de base (3), et
**caractérisé par**
- un rebord (4) fourni dans l'espacement entre les deux éléments protubérants (2a, 2b) sur l'élément de base (3), le rebord (4) étant positionné de manière à être adapté pour s'étendre le long d'une partie d'une surface du disque de frein (7) et entre le/les piston(s) de frein (5) et les moyens de fixation (6) et définissant une taille d'espacement minimale entre les deux éléments (2a, 2b).

17. Eolienne comprenant un système de frein selon la revendication 15, l'éolienne comprenant une tour (9) et une nacelle (10), l'éolienne comprenant en outre un disque de frein (7) sous la forme d'une bride dentée fixée sur le haut de la tour (9) et faisant partie d'un système de mouvement de lacet de la nacelle (10), dans laquelle l'étrier de frein (1) est fixé à la nacelle (10) et les deux éléments protubérants (2a, 2b) enjambant le disque de frein (7) de manière à ce qu'un mouvement du piston de frein (5) en direction du disque de frein (7) puisse fournir une force de friction de freinage pour le disque de frein (7) afin d'empêcher ou limiter le mouvement de lacet de la nacelle (10).
